# FASCICULE DE BREVET EUROPEEN

(11) **EP 4 433 805 B1**
(45) Date de publication et mention de la délivrance du brevet: **03.06.2026**
(21) Numéro de dépôt: 22834677.1
(22) Date de dépôt: 15.11.2022
(51) Int. Cl.: G01N 21/55, G01N 21/84

(54) **DETERMINATION D'UNE ORIENTATION CRISTALLOGRAPHIQUE D'UNE SURFACE D'UNE PIECE D'UN AERONEF**
BESTIMMUNG EINER KRISTALLOGRAPHISCHEN ORIENTIERUNG EINER OBERFLÄCHE EINES BAUTEILS EINES FLUGZEUGS
DETERMINATION OF A CRYSTALLOGRAPHIC ORIENTATION OF A SURFACE OF A COMPONENT OF AN AIRCRAFT

(30) Priorité: 19.11.2021 FR 2112286
(43) Date de publication de la demande: 25.09.2024
(73) Titulaire: SAFRAN, 75015 Paris (FR)
(72) Inventeur: GERARDIN, Benoit, 77550 MOISSY-CRAMAYEL (FR); REMACHA, Clement, 77550 MOISSY-CRAMAYEL (FR); CLEMENT, Gatien, 77550 MOISSY-CRAMAYEL (FR)
(74) Mandataire: Gevers & Orès
(86) Numéro de dépôt international: PCT/FR2022/052090
(87) Numéro de publication internationale: WO 2023/089265

(56) Documents cités:
- EP-A2- 0 263 621
- WO-A1-2021/080515
- FR-A1- 2 988 841
- US-A1- 2002 005 952
- US-A1- 2017 039 696
- IRVINE S J C ET AL: "IN SITU CHARACTERIZATION TECHNIQUES FOR MONITORING AND CONTROL OF VPE GROWTH OF HG1-XCDXTE", SEMICONDUCTOR SCIENCE TECHNOLOGY, IOP PUBLISHING LTD, GB, vol. 8, no. 6S, June 1993 (1993-06-01), pages 860 - 871, XP000403223, ISSN: 0268-1242, DOI: 10.1088/0268-1242/8/6S/007

## Description

### Domaine technique de l'invention

La présente invention concerne un procédé de détermination d'une orientation cristallographique d'une surface d'une pièce d'un aéronef, ainsi qu'un procédé de contrôle non destructif pour une pièce aéronautique en matériau monocristallin ou bien polycristallin.

### Arrière-plan technologique

Les pièces aéronautiques telles que les aubes de turbines sont soumises en fonctionnement à des contraintes thermomécaniques importantes. Ainsi, la pérennité des caractéristiques matériaux de ses pièces doit être vérifiée. Une pièce en matériau monocristallin ou bien polycristallin est élaborée. Afin de garantir un état de structure cristalline défini, la pièce doit être contrôlée de manière non-destructive afin de vérifier qu'elle ne présente pas de défaut d'orientation cristalline en surface, par exemple des grains parasites ou des grains recristallisés

En particulier, les aubes de turbine sont généralement fabriquées de façon à obtenir une orientation cristalline bien particulière. En effet, les zones de jonction entre différentes orientations représentent des points faibles dans la pièce.

Une méthode connue est la méthode de Laue en réflexion (RXO). Cependant, les systèmes utilisant cette méthode sont conçus pour envoyer, avec un certain angle, un faisceau de rayons X sur une surface très petite, au plus de quelques mm². La figure de diffraction résultante est ensuite analysée pour déterminer l'orientation cristalline. Cette analyse est complexe et, de ce fait, assez longue. Ainsi, pour analyser une grande surface, il est nécessaire de multiplier les mesures, ce qui multiplie le temps d'analyse. En outre, l'utilisation de rayons X implique l'utilisation d'un matériel complexe et donc coûteux.

Il peut ainsi être souhaité de prévoir un procédé de détermination d'une orientation cristallographique d'une surface d'une pièce d'un aéronef, qui permette de s'affranchir d'au moins une partie des problèmes et contraintes précités.
Par ailleurs, les demandes de brevets publiées sous les numéros
US 2017/039696 A1 et FR 2 988 841 A1 décrivent des procédés de détermination d'une orientation cristallographique.

### Résumé de l'invention

Il est donc proposé un procédé de détermination d'une orientation cristallographique d'une surface d'une pièce d'un aéronef, caractérisé en ce qu'il comporte :
- pour chacune de plusieurs positions d'éclairage :
   - un éclairage non collimaté de la surface depuis la position d'éclairage considérée, et
   - une acquisition, à un même point d'acquisition pour toutes les positions d'éclairage, d'une image dite brute de la surface éclairée ;
- pour chaque position d'éclairage et pour chaque pixel des images brutes, une détermination d'une orientation possible de facettes cristallines d'une zone correspondant au pixel considéré, en considérant une propagation lumineuse depuis la position d'éclairage considérée jusqu'à la position d'acquisition, avec une réflexion spéculaire sur les facettes cristallines de la zone correspondant au pixel considéré ;
- à partir des images brutes et des orientions possibles associées à leurs pixels, une construction d'un profil de réflectance donnant une réflectance en fonction de l'orientation possible des facettes ; et
- une détermination d'une orientation réelle des facettes à partir du profil de réflectance.

Ainsi, l'invention permet d'obtenir l'orientation cristallographique de toute la surface que le dispositif d'acquisition est capable d'imager avec une résolution souhaitée. En outre, l'invention utilise de la lumière non collimatée, qui peut être produite par des dispositifs d'éclairage simples et donc peu coûteux.

L'invention peut en outre comporter l'une ou plusieurs des caractéristiques additionnelles suivantes, selon toute combinaison techniquement possible.

Dans un mode de réalisation, la surface a préalablement été attaquée chimiquement pour faire apparaitre les facettes cristallines, par exemple celles repérées par les indice de Miller {100}.

Dans un mode de réalisation également, la détermination d'une orientation possible pour chaque position d'éclairage et pour chaque pixel des images brutes, comporte : - une détermination des positions relatives des zones par rapport aux positions d'éclairage et à la position d'acquisition, par exemple à partir d'une distance entre la surface et la position d'acquisition pouvant être déterminée à partir d'une mise au point sur la surface d'un dispositif d'acquisition situé à la position d'acquisition ; et - pour chaque position d'éclairage et chaque pixel, une détermination des trois angles : azimut incident, élévation incidente et élévation retour à partir des positions relatives, l'orientation possible étant calculée à partir de ces trois angles.

Dans un mode de réalisation également, le procédé comporte une correction des images brutes pour compenser un éclairage inhomogène de la surface, afin de donner des images corrigées associant à chaque pixel une réflectance.

Dans un mode de réalisation également, la correction comporte, pour chacune des positions d'éclairage : - un éclairage non collimaté depuis la position d'éclairage considérée d'une surface neutre placée à la place de la surface de la pièce ; - une acquisition d'une image floue de la surface neutre éclairée, dite image corrective, et - une correction de l'image brute obtenue par l'éclairage depuis la position d'éclairage considérée, à partir de l'image corrective pour donner l'image corrigée.

Dans un mode de réalisation également, la correction de l'image brute comporte une division de l'image brute par l'image corrective de la manière suivante : I(n) = I_{B}(n) ∘ I_{c}^{∘-1}(n), où I(n) est l'image corrigée, I_{B}(n) est l'image brute, I_{c}(n) est l'image corrective, ∘ représente le produit de Hadamard et ^{∘-1} représente l'inverse de Hadamard.

Dans un mode de réalisation également, la construction du profil de réflectance comporte pour chacun de plusieurs intervalles d'orientation, une détermination d'une réflectance moyenne à partir des images brutes et des orientions possibles de leurs pixels.

Dans un mode de réalisation également, une réflectance moyenne est déterminée à partir des images corrigées et des orientions possibles de leurs pixels.

Dans un mode de réalisation également, pour chaque intervalle d'orientation, la réflectance moyenne est égale à la somme des réflectances associées aux orientions possibles contenues dans l'intervalle d'orientation considéré, divisée par le nombre d'orientions possibles contenues dans l'intervalle d'orientation considéré.

Dans un mode de réalisation également, la pièce est un alliage à base Nickel.

Dans un mode de réalisation également, la pièce est une aube d'une turbine.

Il est également proposé un procédé de contrôle non destructif d'un pièce d'aéronautique à matériau monocristallin ou bien polycristallin, par une détermination d'une orientation cristallographique d'une surface de la pièce, conformément à un procédé selon l'invention.

Il est également proposé un système de contrôle non destructif d'une pièce d'aéronautique à matériau monocristallin ou bien polycristallin, par une détermination d'une orientation cristallographique d'une surface de la pièce, caractérisé en ce qu'il comporte :
- un dispositif d'éclairage de la surface de la pièce par une lumière non collimatée sélectivement depuis plusieurs positions d'éclairage ;
- un dispositif d'acquisition d'image de la surface ; et
- un dispositif de supervision conçu pour commander le dispositif d'éclairage et le dispositif d'acquisition d'image pour mettre en œuvre un procédé selon l'invention.

### Brève description des figures

L'invention sera mieux comprise à l'aide de la description qui va suivre, donnée uniquement à titre d'exemple et faite en se référant aux dessins annexés dans lesquels :
- la figure 1 est une vue simplifiée d'un système selon l'invention de détermination d'une orientation cristallographique d'une surface d'une pièce d'un aéronef,
- la figure 2 est un agrandissement de la surface montrant des facettes cristallines,
- la figure 3 est un schéma bloc d'un procédé selon l'invention de détermination d'une orientation cristallographique de la surface,
- la figure 4 illustre des angles d'un trajet lumineux d'éclairage de la surface,
- la figure 5 illustre une combinaisons d'images en données utiles pour la construction d'un profil de réflectance,
- la figure 6 illustre l'utilisation d'histogrammes pour obtenir le profil de réflectance,
- la figure 7 est une représentation polaire du profil de réflectance,
- la figure 8 est identique à la figure 7, avec en plus une courbe impulsionnelle ajustée sur le profil de réflectance, et
- la figure 9 est une coupe de la figure 8 le long d'un axe d'angle d'élévation.

### Description détaillée de l'invention

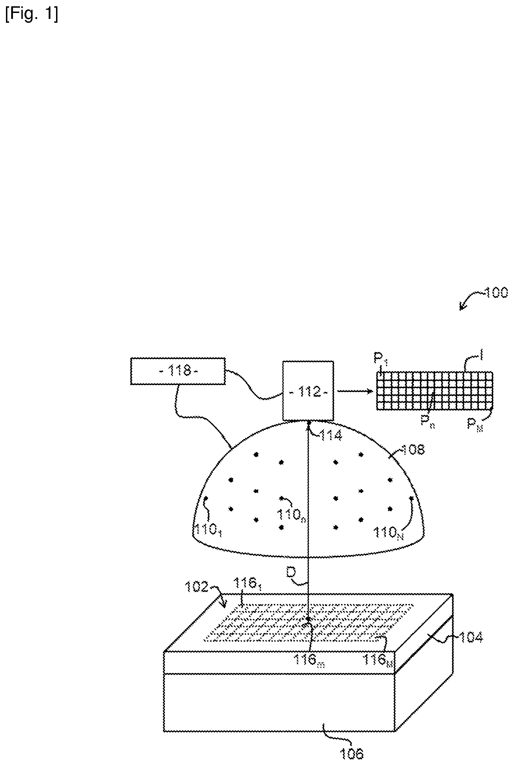

En référence à la figure 1, un exemple d'un système 100 de détermination d'une orientation cristallographique d'une surface 102, de préférence plane, d'une pièce 104 d'un aéronef va à présent être décrit.

La pièce 104 peut être une aube de turbine et peut être faite d'un métal solide, tel qu'un alliage à base Nickel. En outre, il est supposé que la pièce 104 est constituée, au niveau de la surface 102, d'un monocristal constitué de structures élémentaires identiques.

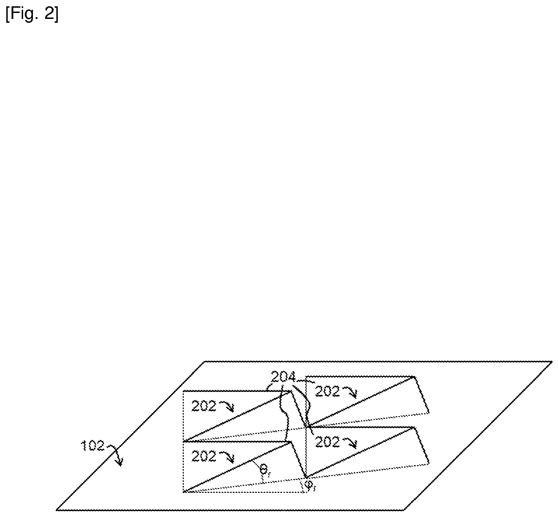

L'orientation cristallographie recherchée est celle de ce monocristal, et plus précisément, en référence à la figure 2, celle d'une même facette 202 (également appelée plan cristallin) présente dans les structures élémentaires 204 du monocristal. L'orientation réelle des facettes 202 est par exemple donnée par un angle φᵣ dans le plan de la surface 102 (appelé azimut) et par un angle θᵣ d'élévation par rapport à ce plan de la surface 102.

De retour à la figure 1, le système 100 comporte tout d'abord un support 106 de réception de la pièce 104.

Le système 100 comporte en outre un dispositif d'éclairage 108 de la surface 102 de la pièce 104, lorsque cette dernière est reçue sur le support 106. Le dispositif d'éclairage 108 est conçu pour éclairer la surface 102 depuis plusieurs positions d'éclairage 110ₙ (n variant de 1 à N, N étant le nombre de positions d'éclairage) présentant des orientations incidentes différentes. Par exemple, le dispositif d'éclairage 108 comporte une source lumineuse non collimatée placée à chaque position d'éclairage 110ₙ et est conçue pour activer successivement ces sources lumineuses. La lumière émise par chaque source lumineuse est par exemple dans le domaine visible, en particulier avec une longueur d'onde comprise entre 400 et 800 nanomètres. Chaque source lumineuse comporte par exemple une diode électroluminescente (généralement désignée par l'acronyme anglais LED, pour « Light-Emitting Diode »). Alternativement, une seule source lumineuse pourrait être utilisée et serait alors par exemple successivement déplacée à chaque position d'éclairage 110ₙ.

Le système 100 comporte en outre un dispositif d'acquisition d'image 112 placé à une position d'acquisition 114. Le dispositif d'acquisition 112 est conçu pour fournir des images I comportant un ensemble de pixels Pₘ (m variant de 1 à M, M étant le nombre de pixels), par exemple une matrice de Nₓ sur N_{y} pixels (M étant alors égal à Nₓ x N_{y}), auxquels sont respectivement assignées des luminances lors de l'acquisition. Les pixels Pₘ correspondent à des zones 116ₘ respectives de la surface 102 éclairée.

Le système 100 comporte en outre un dispositif de supervision 118, conçu pour commander le dispositif d'éclairage 108 et le dispositif d'acquisition d'image 112. Le dispositif de supervision 118 est en particulier conçu pour réaliser les étapes de détermination d'orientation cristallographique qui seront décrites plus loin.

Par exemple, le dispositif de supervision 118 est un système informatique comportant une unité de traitement de données (telle qu'un microprocesseur) et une mémoire principale (telle qu'une mémoire RAM, de l'anglais « Random Access Memory ») accessible par l'unité de traitement de données. Le système informatique comporte en outre par exemple une interface réseau et/ou un support lisible par ordinateur, comme par exemple un support local (tel qu'un disque dur local) ou bien un support distant (tel qu'un disque dur distant et accessible via par l'interface réseau au travers d'un réseau de communication) ou bien encore un support amovible (tel qu'une clé USB, de l'anglais « Universal Serial Bus », ou bien un CD, de l'anglais « Compact Disc » ou bien un DVD, de l'anglais « Digital Versatile Disc ») lisible au moyen d'un lecteur approprié du système informatique (tel qu'un port USB ou bien un lecteur de disque CD et/ou DVD). Un programme d'ordinateur contenant des instructions pour l'unité de traitement est enregistré sur le support et/ou téléchargeable via l'interface réseau. Ce programme d'ordinateur est par exemple destiné à être chargé dans la mémoire principale, afin que l'unité de traitement de données exécute ses instructions. Le programme d'ordinateur comporte par exemple des modules logiciels pour respectivement mettre en œuvre les étapes décrites plus loin. Cependant, cette présentation ne préjuge pas de la forme du programme d'ordinateur, qui peut être quelconque.

Alternativement, tout ou partie de ces modules pourrait être implémenté sous forme de modules matériels, c'est-à-dire sous forme d'un circuit électronique, par exemple micro-câblé, ne faisant pas intervenir de programme d'ordinateur.

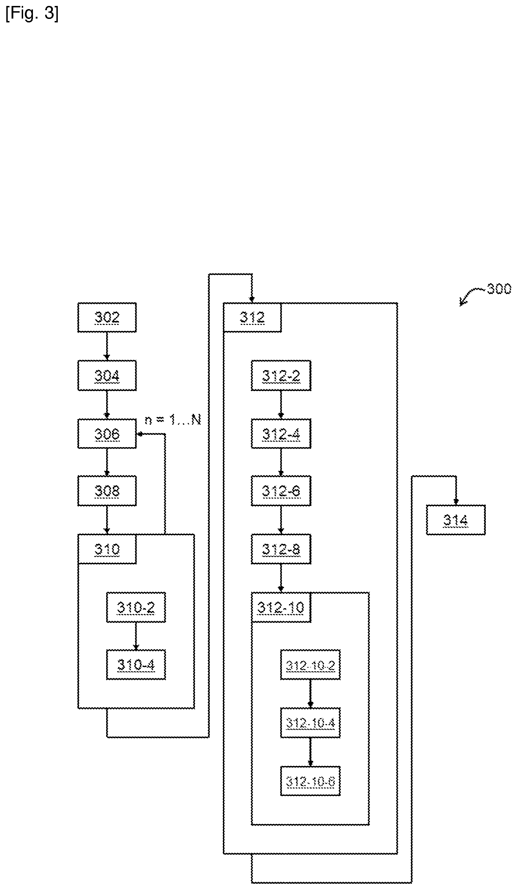

En référence à la figure 3, un exemple de procédé de détermination 300 d'orientation cristallographique de la surface 102 de la pièce 104, va à présent être décrit.

Au cours d'une étape 302, une attaque chimique (« etching » en anglais) de la surface 102 est réalisée pour faire apparaître les facettes 202. Par exemple, l'attaque chimique est telle que les facettes 202 révélées sont celles repérées par les indices de Miller {100}.

Au cours d'une étape 304, le dispositif d'acquisition 112 est configuré par exemple par le dispositif de supervision 118 pour réaliser une mise au point sur la surface 102, c'est-à-dire pour s'assurer que la surface 102 soit dans un plan focal du dispositif d'acquisition 112.

Les étapes suivantes 306 à 310 sont alors réalisées par exemple par le dispositif de supervision 118 pour chaque position d'éclairage 110ₙ.

Au cours d'une étape 306, la surface 102 est éclairée par le dispositif d'éclairage 108 depuis la position d'éclairage 110ₙ considérée. L'éclairage est non-collimaté.

Au cours d'une étape 308, une image dite brute I_{B}(n) de la surface 102 éclairée est acquise au point d'acquisition 114 par le dispositif d'acquisition 112. Lors de l'acquisition, une luminance est associée à chaque pixel Pₘ de l'image brute I_{B}(n).

Au cours d'une étape 310, pour chaque position d'éclairage 110ₙ et pour chaque pixel Pₘ, une orientation possible θ_{n,m}, φ_{n,m} des facettes 202 de la zone 116ₘ correspondant au pixel Pₘ considéré est déterminée. Pour cela, il est supposé une propagation lumineuse depuis la position d'éclairage 11 0ₙ considérée jusqu'à la position d'acquisition 114, avec une réflexion spéculaire sur les facettes cristallines de la zone 116ₘ. Ainsi, il est obtenu N x M orientations possibles.

L'étape 310 peut tout d'abord comporter, au cours d'une étape 310-2, une détermination des positions relatives des zones 116ₘ par rapport aux positions d'éclairage 110ₙ et à la position d'acquisition 114, par exemple à partir d'une distance D entre la surface 102 et la position d'acquisition 114 qui peut être déterminée à partir de la mise au point du dispositif d'acquisition 114 à l'étape 304.

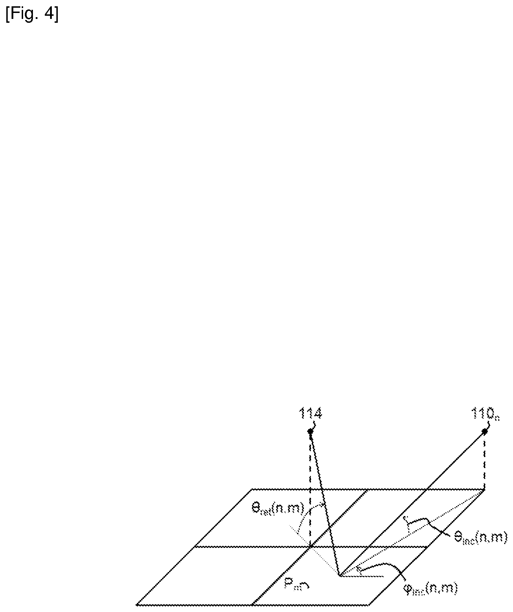

Puis, au cours d'une étape 310-4, comme cela est illustré sur la figure 4, pour chaque position d'éclairage 110ₙ et chaque pixel Pₘ, un azimut incident φ_{inc}(n,m), une élévation incidente θ_{inc}(n,m) et une élévation retour θᵣₑₜ(n,m) de l'éclairage sont déterminés à partir des positions relatives des zones 116ₘ par rapport aux positions d'éclairage 110ₙ et à la position d'acquisition 114. Ainsi, pour chaque position d'éclairage 110ₙ et chaque pixel Pₘ, l'orientation possible θ_{n,m}, φₙ,ₘ, est donnée par θ_{n,m} = θ_{inc}(n,m) + θᵣₑₜ(n,m), et φₙ,ₘ = φ_{inc}(n,m).

Ainsi, chaque pixel Pₘ de chaque image brute I_{B}(n) est associé, d'une part, à une luminance et, d'autre part, à une orientation possible θ_{n,m}, φₙ,ₘ. Ainsi, à ce stade, la luminance est connue pour chaque orientation possible θ_{n,m}, φₙ,ₘ.

Au cours d'une étape 312, à partir des images brutes I_{B}(n) et des orientions possibles θ_{n,m}, φ_{n,m} associées à leurs pixels Pₘ, il est construit, par exemple par le dispositif de supervision 118, un profil de réflectance donnant une réflectance R en fonction de l'orientation possible θ, φ des facettes 202. L'étape 312 comporte par exemple les étapes suivantes.

Au cours d'une étape 312-2, le dispositif d'acquisition 112 est configuré pour flouter une surface neutre placée à la place de la surface 102 de la pièce 104. Dans la mesure du possible, la surface neutre ne doit pas présenter de détails géométriques apparents et doit réfléchir la lumière de manière uniforme. La surface neutre comporte par exemple un papier blanc recouvrant la surface 102 de la pièce 104.

Les étapes suivantes sont alors mises en œuvre pour chacune des positions d'éclairage 110ₙ.

Au cours d'une étape 312-4, la surface neutre est éclairée par le dispositif d'éclairage 108 depuis la position d'éclairage 110ₙ considérée.

Au cours d'une étape 312-6, une image dite corrective I_{c}(n) de la surface neutre éclairée, est acquise par le dispositif d'acquisition 112. Une luminance est associée à chaque pixel Pₘ lors de cette acquisition.

Au cours d'une étape 312-8, l'image brute I_{B}(n) obtenue par l'éclairage depuis la position d'éclairage 110ₙ considérée, est corrigée à partir de l'image corrective I_{c}(n) pour donner une image corrigée I(n) dans laquelle une réflectance est associée à chaque pixel Pₘ. Par exemple, l'image brute I_{B}(n) est divisée par l'image corrective I_{c}(n) de la manière suivante : I(n) = I_{B}(n) ∘ I_{c}^{∘-1}(n), où ∘ représente le produit de Hadamard et °⁻¹ représente l'inverse de Hadamard.

Cette correction permet de compenser le fait que l'éclairage par le dispositif d'éclairage 108 n'est pas uniforme sur la surface 102. Bien sûr, une telle correction ne serait pas nécessaire en cas d'éclairage uniforme, et les luminances des images brutes pourraient être utilisées comme réflectances.

Au cours d'une étape 312-10, pour chacun de plusieurs intervalles d'orientation (intervalles bidimensionnels sur θ et φ dans l'exemple décrit), une réflectance moyenne est déterminée à partir des images corrigées I(n) et des orientions possibles θ_{n,m}, φ_{n,m} de leurs pixels Pₘ.

L'étape 312-10 comporte par exemple les étapes suivantes.

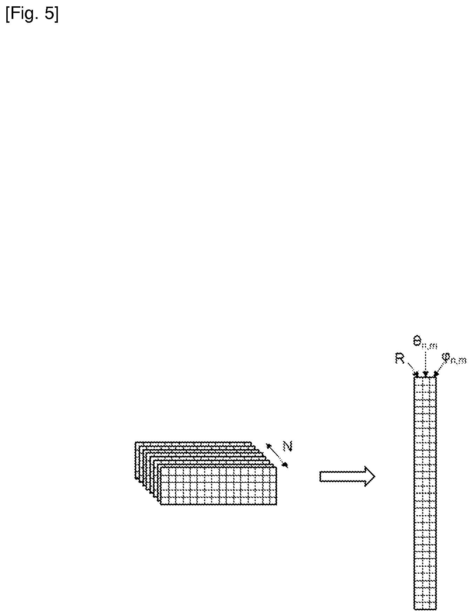

Au cours d'une étape 312-10-2, les réflectances contenues dans les images corrigées I(n) sont réorganisées pour ne considérer que les triplets (R, θ_{n,m} et φₙ,ₘ), sans se préoccuper des positions des pixels Pₘ. Cette réorganisation donne par exemple trois vecteurs de longueur N x M contenant respectivement l'azimut possible φₙ,ₘ, l'élévation possible θ_{n,m} et la réflectance R associée, comme cela est illustré sur la figure 5.

De retour à la figure 3, au cours d'une étape 312-10-4, un histogramme pondéré H par la réflectance et un histogramme non pondéré H' par la réflectance sont construits. L'histogramme pondéré H associe, à chaque intervalle d'orientation, la somme des réflectances associées aux orientions possibles θ_{n,m}, φ_{n,m} contenues dans l'intervalle d'orientation considéré. L'histogramme non pondéré H associe, à chaque intervalle d'orientation, le nombre de réflectances associées aux orientions possibles θ_{n,m}, φ_{n,m} contenues dans l'intervalle d'orientation considéré.

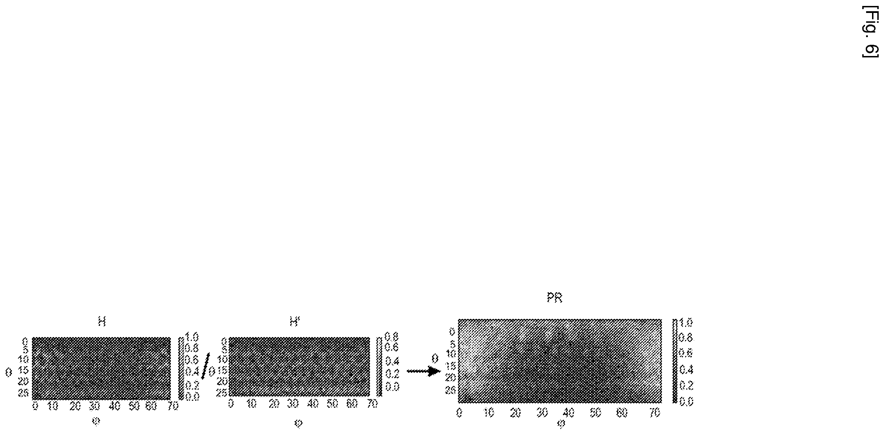

Au cours d'une étape 312-10-6, comme illustré sur la figure 6, l'histogramme pondéré H est divisé par l'histogramme non pondéré H' pour donner le profil de réflectance PR.

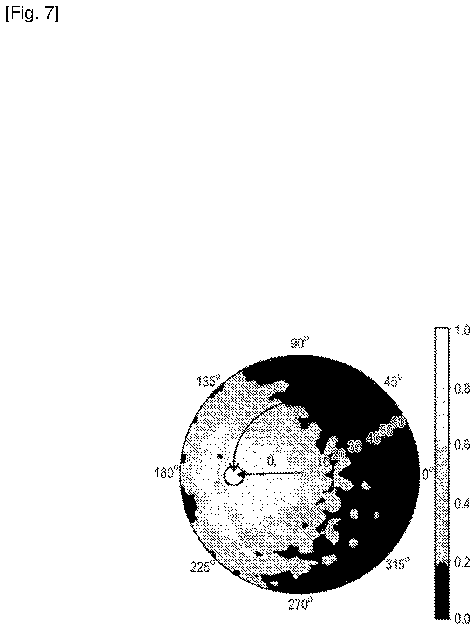

Ce profil de réflectance PR peut être représenté en cordonnées polaires, en considérant l'élévation θ comme une norme des coordonnées polaires et l'azimut φ comme un angle des coordonnées polaires. Une telle représentation en coordonnées polaires est illustrée sur la figure 7.

De retour à la figure 3, au cours d'une étape 314, une orientation réelle θᵣ, φᵣ des facettes 202 est déterminée, par exemple par le dispositif de supervision 118, à partir du profil de réflectance PR. Plus précisément, l'orientation réelle θᵣ, φᵣ des facettes 202 est celle pour laquelle la réflectance est maximale d'après le profil de réflectance PR, c'est-à-dire après analyse du profil de réflectance PR.

Par exemple, l'orientation réelle θᵣ, φᵣ des facettes 202 est celle pour laquelle le profil de réflectance PR donne une réflectance maximale. Dans ce cas, l'analyse est très simple puisqu'elle se limite à rechercher le point du profil de réflectance avec la réflectance maximale. Cette réflectance maximale est indiquée par un cercle sur la figure 7.

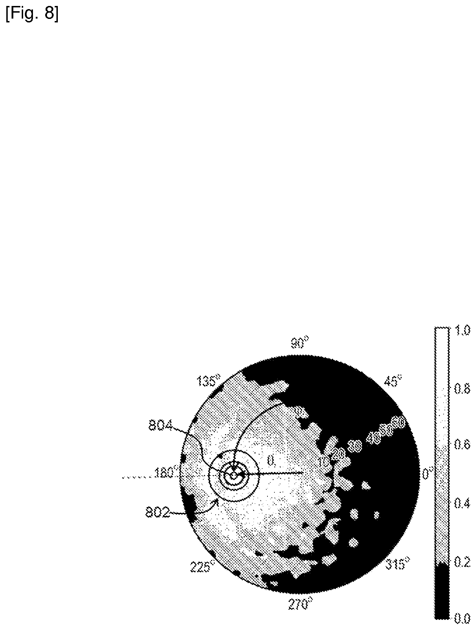

En référence à la figure 8, l'orientation réelle θᵣ, φᵣ pourrait alternativement être déterminée en ajustant (de l'anglais « fitting ») une courbe tridimensionnelle 802 en forme de pic (c'est-à-dire impulsionnelle) sur le profil de réflectance PR, et en prenant comme orientation réelle θᵣ, φᵣ des facettes 202 celle d'un sommet 804 de la courbe tridimensionnelle 802. Cette courbe tridimensionnelle 802 est par exemple une courbe gaussienne. Dans ce cas, l'analyse comporte la phase d'ajustement de la courbe tridimensionnelle 802 sur le profil de réflectance PR.

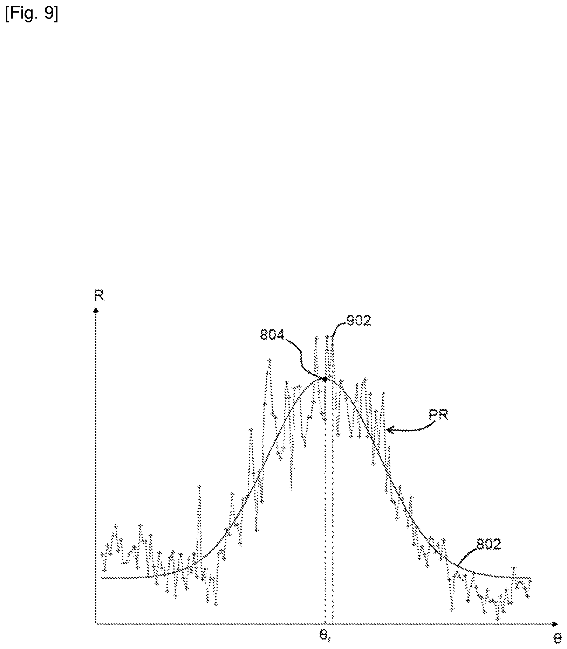

En référence à la figure 9 représentant une coupe du profil de réflectance PR selon l'élévation θ (c'est-à-dire selon la ligne pointillée de la figure 8), la position angulaire du sommet 804 peut ainsi être différente de celle de la réflectance maximale 902 donnée par le profil de réflectance PR.

II apparaît clairement qu'un procédé tel que celui décrit précédemment permet d'utiliser de la lumière non collimatée.

On notera par ailleurs que l'invention n'est pas limitée aux modes de réalisation décrits précédemment. Il apparaîtra en effet à la personne du métier que diverses modifications peuvent être apportées aux modes de réalisation décrits ci-dessus, à la lumière de l'enseignement qui vient de lui être divulgué.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de la personne du métier en appliquant ses connaissances générales à la mise en œuvre de l'enseignement qui vient de lui être divulgué.

## Revendications

1. Procédé (300) de détermination d'une orientation cristallographique d'une surface (102) d'une pièce (104) d'un aéronef, comportant:
- pour chacune de plusieurs positions d'éclairage (110ₙ) :
• un éclairage (306) non collimaté de la surface (102) depuis la position d'éclairage considérée (110ₙ), et
• une acquisition (308), à un même point d'acquisition (114) pour toutes les positions d'éclairage (110ₙ), d'une image dite brute de la surface (102) éclairée ;
- pour chaque position d'éclairage (110ₙ) et pour chaque pixel (Pₘ) des images brutes, une détermination (310) d'une orientation possible (θₙ,ₘ, φₙ,ₘ) de facettes cristallines (202) d'une zone (116ₘ) correspondant au pixel (Pₘ) considéré, en considérant une propagation lumineuse depuis la position d'éclairage (110ₙ) considérée jusqu'à la position d'acquisition (114), avec une réflexion spéculaire sur les facettes cristallines (202) de la zone (116ₘ) correspondant au pixel (Pₘ) considéré ;
- à partir des images brutes et des orientions possibles (θₙ,ₘ, φₙ,ₘ) associées à leurs pixels (Pₘ), une construction (312) d'un profil de réflectance (PR) donnant une réflectance (R) en fonction de l'orientation possible des facettes (202) ; et
- une détermination (314) d'une orientation réelle (θᵣ, φᵣ) des facettes à partir du profil de réflectance (PR).

2. Procédé selon la revendication 1, dans lequel la surface (102) a préalablement été attaquée chimiquement pour faire apparaitre les facettes cristallines (202), par exemple celles repérées par les indice de Miller {100}.

3. Procédé selon la revendication 1 ou 2, dans lequel la détermination (310) d'une orientation possible (θₙ,ₘ, φ_{n,m}) pour chaque position d'éclairage (110ₙ) et pour chaque pixel (Pₘ) des images brutes, comporte :
- une détermination (310-2) des positions relatives des zones (116ₘ) par rapport aux positions d'éclairage (110ₙ) et à la position d'acquisition (114), par exemple à partir d'une distance (D) entre la surface (102) et la position d'acquisition (114) pouvant être déterminée à partir d'une mise au point sur la surface (102) d'un dispositif d'acquisition (112) situé à la position d'acquisition (114) ; et
- pour chaque position d'éclairage (110ₙ) et chaque pixel (Pₘ), une détermination (310-4) des trois angles : azimut incident (φ_{inc}(n,m)), élévation incidente (θ_{inc}(n,m)) et élévation retour (θᵣₑₜ(n,m)) à partir des positions relatives, l'orientation possible (θₙ,ₘ,φₙ,ₘ) étant calculée à partir de ces trois angles.

4. Procédé selon l'une quelconque des revendications 1 à 3, comportant une correction des images brutes pour compenser un éclairage inhomogène de la surface, afin de donner des images corrigées associant à chaque pixel une réflectance.

5. Procédé selon la revendication 4, dans lequel la correction comporte :
- pour chacune des positions d'éclairage (110ₙ) :
• un éclairage non collimaté depuis la position d'éclairage (110ₙ) considérée d'une surface neutre placée à la place de la surface (102) de la pièce (104),
• une acquisition d'une image floue de la surface neutre éclairée, dite image corrective, et
• une correction de l'image brute obtenue par l'éclairage depuis la position d'éclairage (110ₙ) considérée, à partir de l'image corrective pour donner l'image corrigée.

6. Procédé selon la revendication 5, dans lequel la correction de l'image brute comporte une division de l'image brute par l'image corrective de la manière suivante : I(n) = I_{B}(n) ∘ I_{c}°⁻¹(n), où I(n) est l'image corrigée, I_{B}(n) est l'image brute, Ic(n) est l'image corrective, ∘ représente le produit de Hadamard et °⁻¹ représente l'inverse de Hadamard.

7. Procédé selon l'une quelconque des revendications 1 à 6, dans lequel la construction (312) du profil de réflectance (PR) comporte pour chacun de plusieurs intervalles d'orientation, une détermination d'une réflectance moyenne à partir des images brutes et des orientions possibles (θₙ,ₘ,φₙ,ₘ) de leurs pixels (Pₘ).

8. Procédé selon l'une quelconque des revendications 4 à 6 et selon la revendication 7, dans lequel une réflectance moyenne est déterminée à partir des images corrigées et des orientions possibles (θₙ,ₘ,φₙ,ₘ) de leurs pixels (Pₘ).

9. Procédé selon la revendication 7 ou 8, dans lequel, pour chaque intervalle d'orientation, la réflectance moyenne est égale à la somme des réflectances associées aux orientions possibles (θₙ,ₘ,φₙ,ₘ) contenues dans l'intervalle d'orientation considéré, divisée par le nombre d'orientions possibles (θₙ,ₘ,φₙ,ₘ) contenues dans l'intervalle d'orientation considéré.

10. Procédé selon l'une quelconque des revendications 1 à 9, dans lequel la pièce (104) est un alliage à base Nickel.

11. Procédé selon l'une quelconque des revendications 1 à 10, dans lequel la pièce (104) est une aube d'une turbine.

12. Procédé de contrôle non destructif d'un pièce (104) d'aéronautique à matériau monocristallin ou bien polycristallin, par une détermination d'une orientation cristallographique d'une surface de la pièce, conformément à un procédé selon l'une quelconques des revendications 1 à 11.

13. Système (100) de contrôle non destructif d'une pièce (104) d'aéronautique à matériau monocristallin ou bien polycristallin, par une détermination d'une orientation cristallographique d'une surface (102) de la pièce (104), comportant
- un dispositif (108) d'éclairage de la surface (102) de la pièce (104) par une lumière non collimatée sélectivement depuis plusieurs positions d'éclairage (110ₙ) ;
- un dispositif (112) d'acquisition d'image de la surface (102) ; et
- un dispositif de supervision conçu pour commander le dispositif d'éclairage (108) et le dispositif d'acquisition d'image (112) pour mettre en œuvre un procédé selon l'une quelconque des revendications 1 à 12.

## Patentansprüche

1. Verfahren (300) zur Bestimmung einer kristallographischen Orientierung einer Oberfläche (102) eines Bauteils (104) eines Flugzeugs, umfassend:
- für jede von mehreren Beleuchtungspositionen (110ₙ):
- nicht kollimiertes Beleuchten (306) der Oberfläche (102) aus der betrachteten Beleuchtungsposition (110ₙ), und
- Erfassen (308), an ein und demselben Erfassungspunkt (114) für sämtliche Beleuchtungspositionen (110ₙ), von einem als Rohbild bezeichneten Bild der beleuchteten Oberfläche (102);
- für jede Beleuchtungsposition (110ₙ) und für jedes Pixel (Pₘ) der Rohbilder Bestimmen (310) einer möglichen Orientierung (θ_{n,m},φ_{n,m}) von Kristallflächen (202) eines Bereichs (116ₘ), der dem betrachteten Pixel (Pₘ) entspricht, wobei eine Lichtausbreitung von der betrachteten Beleuchtungsposition (110ₙ) aus bis zur Erfassungsposition (114) betrachtet wird, mit einer Spiegelreflexion an den Kristallflächen (202) des Bereichs (116ₘ), der dem betrachteten Pixel (Pₘ) entspricht;
- aus den Rohbildern und den möglichen Orientierungen (θ_{n,m},φ_{n,m}), die ihren Pixeln (Pₘ) zugehörig sind, Erstellen (312) eines Reflektivitätsprofils (PR), das eine Reflektivität (R) in Abhängigkeit von der möglichen Orientierung der Flächen (202) angibt; und
- Bestimmen (314) einer tatsächlichen Orientierung (θᵣ,φᵣ) der Flächen anhand des Reflektivitätsprofils (PR).

2. Verfahren nach Anspruch 1, wobei die Oberfläche (102) zuvor chemisch geätzt wurde, damit die Kristallflächen (202) sichtbar werden, beispielsweise die mit den Miller-Indizes {100} gekennzeichneten Kristallflächen.

3. Verfahren nach Anspruch 1 oder 2, wobei das Bestimmen (310) einer möglichen Orientierung (θ_{n,m},φ_{n,m}) für jede Beleuchtungsposition (110ₙ) und für jedes Pixel (Pₘ) der Rohbilder Folgendes umfasst:
- Bestimmen (310-2) der relativen Position der Bereiche (116ₘ) bezogen auf die Beleuchtungspositionen (110ₙ) und die Erfassungsposition (114), beispielsweise unter Verwendung eines Abstands (D) zwischen der Oberfläche (102) und der Erfassungsposition (114), die bestimmt werden kann, indem eine Erfassungsvorrichtung (112), die sich an der Erfassungsposition (114) befindet, auf die Oberfläche (102) ausgerichtet wird; und
- für jede Beleuchtungsposition (110ₙ) und jedes Pixel (Pₘ) Bestimmen (310-4) von drei Winkeln: horizontaler Einfallswinkel (φ_{inc}(n,m)), vertikaler Einfallswinkel (θ_{inc}(n,m)) und vertikaler Reflexionswinkel (θᵣₑₜ(n,m)) aus den relativen Positionen, wobei die mögliche Orientierung (θ_{n,m},φ_{n,m}) anhand von diesen drei Winkeln berechnet wird.

4. Verfahren nach einem der Ansprüche 1 bis 3, das ein Korrigieren der Rohbilder umfasst, damit eine ungleichmäßige Beleuchtung der Oberfläche ausgeglichen wird, sodass korrigierte Bilder entstehen, die mit jedem Pixel eine Reflektivität verknüpfen.

5. Verfahren nach Anspruch 4, wobei das Korrigieren Folgendes umfasst:
- für jede der Beleuchtungspositionen (110n):
- nicht kollimiertes Beleuchten einer neutralen Fläche, die statt der Oberfläche (102) des Bauteils (104) verwendet wird, aus der betrachteten Beleuchtungsposition (110ₙ),
- Erfassen eines als Korrekturbild bezeichneten unscharfen Bilds der beleuchteten neutralen Fläche, und
- Korrigieren des Rohbilds, das durch Beleuchten aus der betrachteten Beleuchtungsposition (110ₙ) erhalten wird, unter Verwendung des Korrekturbilds zum Erhalten des korrigierten Bilds.

6. Verfahren nach Anspruch 5, wobei das Korrigieren des Rohbilds ein Teilen des Rohbilds durch das Korrekturbild auf folgende Weise umfasst: I(n) = I_{B}(n) o I_{c}°⁻¹(n), wobei I(n) das korrigierte Bild ist, I_{B}(n) das Rohbild ist, Ic(n) das Korrekturbild ist, o das Hadamard-Produkt darstellt und °⁻¹ die Hadamard-Inverse darstellt.

7. Verfahren nach einem der Ansprüche 1 bis 6, wobei das Erstellen (312) des Reflektivitätsprofils (PR) für jeden von mehreren Orientierungsbereichen Bestimmen einer mittleren Reflektivität aus den Rohbildern und den möglichen Orientierungen (θ_{n,m},φ_{n,m}) von ihren Pixeln (Pₘ) umfasst.

8. Verfahren nach einem der Ansprüche 4 bis 6 und nach Anspruch 7, wobei eine mittlere Reflektivität unter Verwendung der korrigierten Bilder und der möglichen Orientierung (θ_{n,m},φ_{n,m}) ihrer Pixel (Pₘ) bestimmt wird.

9. Verfahren nach Anspruch 7 oder 8, wobei für jeden Orientierungsbereich die mittlere Reflektivität der Summe der Reflektivität, die den möglichen Orientierungen (θ_{n,m},φ_{n,m}) zugehörig ist, die im betrachteten Orientierungsbereich enthalten sind, geteilt durch die Anzahl möglicher Orientierungen (θ_{n,m},φ_{n,m}), die im betrachteten Orientierungsbereich enthalten sind, entspricht.

10. Verfahren nach einem der Ansprüche 1 bis 9, wobei das Bauteil (104) aus einer Legierung auf Nickelbasis ist.

11. Verfahren nach einem der Ansprüche 1 bis 10, wobei das Bauteil (104) eine Schaufel einer Turbine ist.

12. Verfahren zur zerstörungsfreien Prüfung eines Bauteils (104) in der Luft- und Raumfahrt aus einem einkristallinen oder auch polykristallinen Werkstoff durch Bestimmen einer kristallographischen Orientierung einer Oberfläche des Bauteils gemäß einem Verfahren nach einem der Ansprüche 1 bis 11.

13. System (100) zur zerstörungsfreien Prüfung eines Bauteils (104) in der Luft- und Raumfahrt aus einem einkristallinen oder auch polykristallinen Werkstoff durch Bestimmen einer kristallographischen Orientierung einer Oberfläche (102) des Bauteils (104), aufweisend:
- eine Vorrichtung (108) zum selektiven Beleuchten der Oberfläche (102) des Bauteils (104) mit einem nicht kollimierten Licht von mehreren Beleuchtungspositionen (110ₙ) aus;
- eine Vorrichtung (112) zur Erfassung von Bildern der Oberfläche (102) und
- eine Überwachungsvorrichtung, die zum Steuern der Beleuchtungsvorrichtung (108) und der Bilderfassungsvorrichtung (112) zum Durchführen eines Verfahrens nach einem der Ansprüche 1 bis 12 ausgelegt ist.

## Claims

1. A method (300) for determining a crystallographic orientation of a surface (102) of a part (104) of an aircraft, comprising:
- for each of a plurality of illumination positions (110ₙ):
• a non-collimated illumination (306) of the surface (102) from the given illumination position (110ₙ), and
• an acquisition (308), at one and the same acquisition point (114) for all of the illumination positions (110ₙ), of a so-called raw image of the illuminated surface (102);
- for each illumination position (110ₙ ) and for each pixel (Pₘ) of the raw images, a determination (310) of a possible orientation (θₙ,ₘ,φ_{n,m}) of crystal facets (202) of a zone (116ₘ) corresponding to the given pixel (Pₘ), by considering light propagation from the given illumination position (110ₙ) to the acquisition position (114), with specular reflection on the crystal facets (202) of the area (116ₘ) corresponding to the given pixel (Pₘ);
- from the raw images and the possible orientations (θₙ,ₘ, φₙ,ₘ)associated with their pixels (Pₘ), a construction (312) of a reflectance profile (PR) providing a reflectance (R) as a function of the possible orientation of the facets (202); and
- a determination (314) of an actual orientation (θᵣ, φᵣ) of the facets based on the reflectance profile (PR).

2. The method according to claim 1, wherein the surface (102) has been previously etched to expose the crystalline facets (202), for example those identified by the Miller indices {100}.

3. The method according to claim 1 or 2, wherein the determination (310) of a possible orientation (θₙ,ₘ, φₙ,ₘ)for each illumination position (110ₙ) and for each pixel (Pₘ) of the raw images comprises:
- determining (310-2) the relative positions of the areas (116ₘ) with respect to the illumination positions (110ₙ) and the acquisition position (114), for example based on a distance (D) between the surface (102) and the acquisition position (114) that can be determined from focusing on the surface (102) by an acquisition device (112) located at the acquisition position (114); and
- for each illumination position (110ₙ) and each pixel (Pₘ), a determination (310-4) of the three angles: incident azimuth (φ_{inc} (n,m)), incident elevation (θ_{inc} (n,m)), and return elevation (θᵣₑₜ (n,m)) based on the relative positions, the possible orientation (θₙ,ₘ,φₙ,ₘ)being calculated from these three angles.

4. The method according to any one of claims 1 to 3, comprising a correction of the raw images to compensate for non-uniform illumination of the surface, in order to produce corrected images associating a reflectance with each pixel.

5. The method according to claim 4, wherein the correction comprises:
- for each of the illumination positions (110ₙ):
• a non-collimated illumination from the considered illumination position (110ₙ) of a neutral surface placed in the place of the surface (102) of the part (104),
• an acquisition of a blurred image of the illuminated neutral surface, referred to as a corrective image, and
• a correction of the raw image obtained by illumination from the considered illumination position (110ₙ) using the correction image to produce the corrected image.

6. The method according to claim 5, wherein the correction of the raw image comprises dividing the raw image by the corrective image as follows: I(n) = I_{B} (n) o Ic^{∘-1} (n), where I(n) is the corrected image, I_{B}(n) is the raw image, Ic(n) is the corrective image, o represents the Hadamard product, and °⁻¹ represents the Hadamard inverse.

7. The method according to any one of claims 1 to 6, wherein the construction (312) of the reflectance profile (PR) comprises, for each of a plurality of orientation intervals, a determination of an average reflectance based on the raw images and the possible orientations (θₙ,ₘ, φₙ,ₘ)of their pixels (Pₘ).

8. The method according to any one of claims 4 to 6 and according to claim 7, wherein an average reflectance is determined from the corrected images and the possible orientations (θₙ,ₘ, φₙ,ₘ)of their pixels (Pₘ).

9. The method according to claim 7 or 8, wherein, for each orientation interval, the average reflectance is equal to the sum of the reflectances associated with the possible orientations (θ_{n,m} , φₙ,ₘ)contained in the given orientation interval, divided by the number of possible orientations (θₙ,ₘ,φₙ,ₘ)contained in the given orientation interval.

10. **The** method according to any one of claims 1 to 9, wherein the part (104) is a nickel-based alloy.

11. The method according to any one of claims 1 to 10, wherein the part (104) is a vane of a turbine.

12. The method for non-destructive testing of an aerospace part (104) made of a single-crystal or polycrystalline material, by determining the crystallographic orientation of a surface of the part, in accordance with a method according to any one of claims 1 to 11.

13. A system (100) for non-destructive testing of an aerospace part (104) made of a single-crystal or polycrystalline material, by determining the crystallographic orientation of a surface (102) of the part (104), comprising
- a device (108) for illuminating the surface (102) of the part (104) with non-collimated light selectively from a plurality of illumination positions (110ₙ);
- an image acquisition device (112) of the surface (102); and
- a control device configured to control the illumination device (108) and the image acquisition device (112) to implement a method according to any one of claims 1 to 12.
